# FASCICULE DE BREVET EUROPEEN

(11) **EP 3 061 340 B1**
(45) Date de publication et mention de la délivrance du brevet: **18.04.2018**
(21) Numéro de dépôt: 16157369.6
(22) Date de dépôt: 25.02.2016
(51) Int. Cl.: A01G 17/14, E04H 17/12

(54) **PIQUET MÉTALLIQUE PROFILÉ POUR LE PALISSAGE ARBORICOLE**
METALLPROFILPFOSTEN FÜR DIE SPALIERANORDNUNG VON OBSTBÄUMEN
PROFILED METAL PROP FOR ARBORICULTURAL TYING

(30) Priorité: 27.02.2015 FR 1551679
(43) Date de publication de la demande: 31.08.2016
(73) Titulaire: Julien SA, 84290 Cairanne (FR)
(72) Inventeur: JULIEN, Patrick, 84290 Cairanne (FR); LOURDIN, Nicolas, 84330 St Pierre de Vassols (FR)
(74) Mandataire: Novagraaf Technologies

(56) Documents cités:
- WO-A1-2005/078215
- WO-A1-2012/175546
- DE-A1-102009 034 661
- DE-U1- 8 806 838
- FR-A1- 2 331 952
- FR-A1- 2 510 864
- FR-A1- 2 573 617
- GB-A- 1 426 572

## Description

La présente invention a pour objet un piquet métallique profilé pour le palissage arboricole.

Le secteur technique de l'invention concerne le domaine de la réalisation de piquets aptes à supporter au moins un fil de soutien de branches d'arbres exploités en culture des arbres fruitiers ou d'arbres similaires.

On connaît depuis longtemps divers types de tels piquets dont celui décrit dans la demande de brevet français FR 15 62363 du 26 mars 1968 qui est un piquet de petite section pleine circulaire de diamètre 8mn comportant des crochets rapportés, fixes, et orientés pour recevoir les fils de soutien, dits de palissage, dans la hauteur hors-terre des piquets ; ceux-ci présentant à la fois une faible inertie et un faible diamètre par rapport à leur longueur, soit risquent de se plier facilement si leur enfoncement dans le sol résiste latéralement, soit se couchent si le terrain lâche autour de cet enfoncement, dès qu'ils sont sollicités par des efforts latéraux : ceci est le cas quand le vent souffle, d'autant plus fortement que l'on se trouve dans des régions très ventées, contre les arbustes soutenus par des fils de soutien supportés par lesdits piquets.

Il a donc été développé des piquets de section plus importante, essentiellement en forme de U tels que ceux décrits dans les demandes de brevets FR 2712141, FR 2836331 ou EP 1629709 ou ceux déjà développés à ce jour par le déposant : ces piquets sont réalisés à partir de tôles métalliques pliées et offrent d'une part une largeur d'assise de l'ordre de 50 mm qui leur donne une bonne résistance latérale d'ancrage dans le sol et d'autre part une inertie de section, complétée par quelques pliages, en plus de ceux des angles de la forme en U, formant raidisseurs et essentiellement disposés sur la base et aux extrémités des ailes de celui-ci, qui leur permet de mieux résister à la torsion et à la flexion que le piquet décrit précédemment.

La plupart de ces piquets comportent également des trous de passage pour accrocher des accessoires ou pour passer des fils tendeurs et des linguets ou agrafes formés à partir de la tôle d'acier par découpage et repliement sous forme de languettes pour recevoir latéralement lesdits fils de soutien. Et suivant leur utilisation en tête de rangée ou au milieu de celles-ci ou même en clôture, il faut disposer de différents types de piquets.

Du fait de leurs formes et caractéristiques, ces piquets sont cependant surtout résistants dans la direction de leur plus grande inertie et ils peuvent donc plier ou se tordre sous des efforts de vent important arrivant d'une direction différente.

Pour répondre à cet inconvénient, on connaît alors des piquets métalliques de section fermée comme ceux décrits dans le brevet FR 2650726 qui enseigne un profil de piquets dont la section transversale est une courbe fermée rectangulaire, mais dont l'inertie et la résistance sont faibles, d'autant plus que la fermeture du profil est réalisée par simple recouvrement des deux bords longitudinaux de la paroi métallique formant le piquet ; et celui-ci comporte également des trous nécessitant d'y accrocher des accessoires pour supporter les fils de soutien.

On peut citer par ailleurs la demande de brevet FR2510864 qui enseigne également un profil de piquets dont la section transversale est une courbe fermée de forme générale dite ronde mais qui est en fait un losange dont les côtés déterminent les faces du piquet qui sont ondulées dans le sens longitudinal de la hauteur de celui-ci ; la fermeture du profil est réalisée par un « simple » sertissage dans un angle du losange, ce qui ne permet pas de garantir une bonne tenue du profil lors d'efforts dans la direction de cet angle car le sertissage peut alors se défaire ; par ailleurs la forme ondulée de ses faces obligent de réaliser des ouvertures en forme de C pour supporter les fils de soutien par poinçonnage avec enlèvement de matière dans les parties « dépassant du piquet » diamétralement opposées l'une à l'autre, c'est-à-dire dans les deux angles du losange, adjacents à celui où est réalisé le sertissage de fermeture, ce qui affaiblit également la résistance du profil en ces points de poinçonnage car ce sont les arrêtes d'angles de celui-ci qui apportent le plus de rigidité au profil.

L'ensemble des piquets cités ci-dessus ne sont pas par ailleurs spécifiques au palissage arboricole, car pour cette application les piquets utilisés sont essentiellement en bois, comme ceux décrits dans le brevet FR 2812517 de la sté SCDC, mais qui ont plusieurs inconvénients, dont :
- celui de ne pas avoir de résistance homogène, même s'ils ont la même inertie dans toutes les directions, du fait des couronnes de noeuds,
- le fait qu'il faut leur rajouter des accessoires pour guider et supporter les fils de soutien,
- le fait qu'ils ont une durée de vie limitée,
- le fait qu'ils sont difficiles à planter dans le sol ....

Le problème posé est alors de fabriquer des piquets spécifiquement conçu pour le palissage arboricole, et qui :
- disposent d'une grande inertie omnidirectionnelle sur toute leur hauteur et sans point de faiblesse, sans en augmenter le poids,
- soient ainsi résistants tant en torsion qu'en flexion dans toutes les directions,
- soient sans faiblesse quelque soit la direction des efforts qu'ils subissent et/ou en certains points de leur hauteur,
- soient réalisés sans enlèvement de matière ni ne nécessitent d'y rajouter d'accessoires pour le passage des fils de soutien et sont donc prêts à l'emploi,
- soient utilisables aussi bien en tête de rangée qu'au milieu de celles-ci ou même en clôture,
- et tout en ayant une durée de vie supérieure à 20 ans.
La solution consiste en un piquet selon l'objet de la revendication 1. Ledit piquet comprend un linguet, dont on ne décrira pas ici la forme et le procédé de fabrication car ce linguet peut-être de tout type connu comme celui décrit par exemple dans le brevet FR 2878406 déposé par le même présent déposant, la sté Julien, et qui réalisé dans une partie plane n'affaiblit pas les angles du piquet.

De préférence, la forme octogonale du piquet est refermée par agrafage de deux bords longitudinaux de la paroi métallique formant ce piquet, lesquels bords étant ainsi agrafés dans une partie plane d'une des faces du cylindre octogonal formant le piquet et non dans un de ses angles.

Dans un mode particulier de réalisation le piquet comprend un bouchon-chapeau à son extrémité destinée à ne pas être fichée dans le sol, lequel bouchon-chapeau comporte une rainure sur son sommet apte à permettre, à guider et à supporter le passage d'un câble de faitage.

Un tel piquet suivant l'invention est ainsi un produit de substitution aux piquets bois couramment utilisés dans ce domaine mais qui présente l'avantage d'être prêt à l'emploi (pas de pose d'accessoires pour le passage des fils) tout en ayant un caractère durable (avec une durée de vie supérieure à 20 ans) et écologique (100% recyclable) : ce piquet permet un gain de temps important à la plantation et à l'installation du palissage. Sa résistance constante est également un atout face aux piquets bois dont la résistance est aléatoire comme indiqué précédemment, et les faces tranchantes de l'acier combinées à la forme octogonale de sa section facilitent la pénétration dans le sol.

Le résultat est un nouveau piquet métallique profilé apte à supporter au moins un fil de soutien de branches d'arbres exploités en culture d'arbres fruitiers ou similaires et qui répond au problème posé et dont les avantages évoqués ci-dessus en prouvent l'intérêt. La description et les figures ci-jointes en donnent un exemple de réalisation mais d'autres modes de réalisation sont possibles dans le cadre de la portée de la présente invention.
La figure 1 est une vue de profil d'un piquet suivant l'invention planté droit dans le sol pour former un piquet intermédiaire dans un palissage.
La figure 2 est une vue de profil du même piquet que la figure 1 mais incliné pour former un piquet de tête.
La figure 3 est une vue en coupe suivant III, III' de la figure 1 montrant la section transversale d'un piquet suivant l'invention.
La figure 4 est une vue, en coupe suivant IV, IV' de la figure 5, de dessous d'un bouchon chapeau pour coiffer un piquet suivant l'invention.
La figure 5 est une vue, en coupe verticale suivant V,V' de la figure 4, d'un bouchon chapeau emboité dans l'extrémité creuse supérieure d'un piquet suivant l'invention.

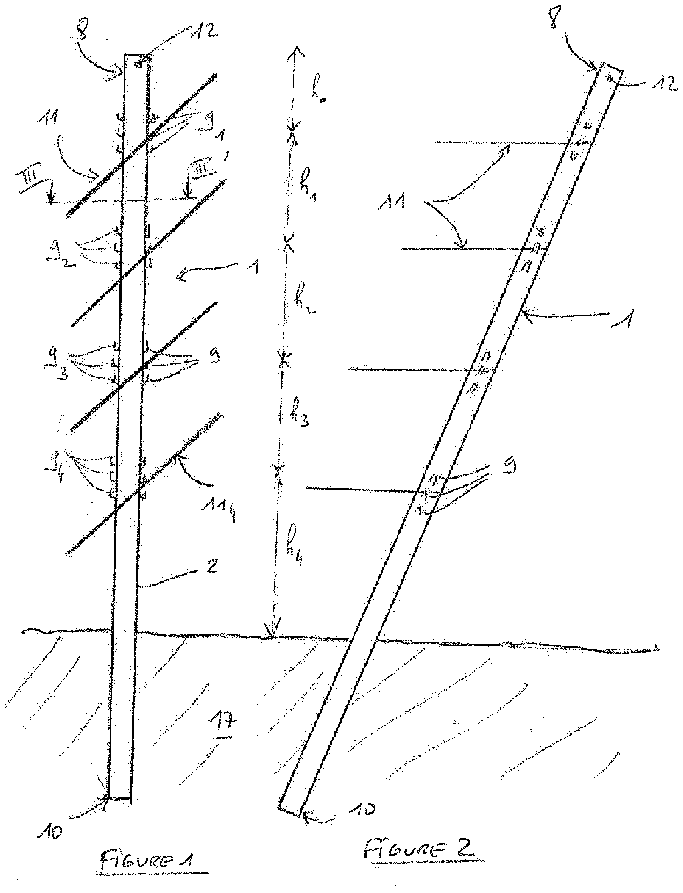

Suivant la représentation des figures 1 et 2 le piquet métallique profilé 1, réalisé d'une manière connue à partir d'une tôle métallique pliée, de préférence en acier galvanisé, est apte à supporter au moins un (soit quatre représentés à titre d'exemple sur les figures) fil de soutien 11 de branches d'arbres exploités en culture d'arbres fruitiers ou similaires planté soit droit dans le sol 17, comme sur la figure 1, pour former un piquet intermédiaire dans un palissage formé par un alignement de tels piquets 1 reliés par les fils 11, soit incliné pour former un piquet de tête, comme représenté sur la figure 2.

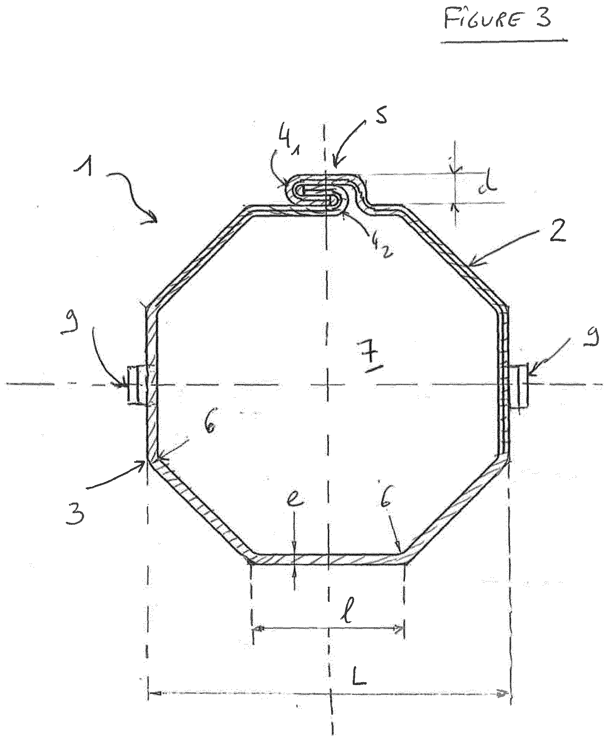

La section transversale 2, telle que représentée sur la figure 3, est une courbe fermée octogonale à huit côtés plans dont chaque côté est de préférence de même largeur « l », séparé de ses 2 cotés adjacents par une pliure 3 d'angle intérieur 6 de 135° ; à titre d'exemple, « l » peut être de 25 à 35 mm, préférentiellement 30mm, et la largeur totale « L », ou diamètre, du piquet 1 est alors de 56 à 82 mm respectivement, préférentiellement 70mm.

Le piquet 1 comporte au moins un trou apte à permettre le guidage et le support dudit au moins un fil de soutien 11 : pour cela le au moins trou est réalisé par poinçonnage d'une petite partie d'une des huit faces planes du cylindre octogonal de la paroi en tôle pliée du piquet 1, laquelle petite partie est déformée pour former un linguet 9 dans lequel est inséré le fil de soutien 11, et le poinçonnage de la tôle laissant ainsi un trou dans celle-ci en face du dit linguet 9.

Comme représenté sur les figures 1 à 3, le piquet 1 comporte des linguets 9 sur au moins deux côtés opposés de sa forme octogonale 2 et situés dans un plan diamétral perpendiculaire à celui passant par l'agrafage de fermeture du profil comme décrit ci-après ; il peut être ainsi réalisé quatre ensembles 9₁, 9₂, 9_{3,} 9₄ de trois linguets superposés, positionnés à la demande suivant les hauteurs de fils de soutien voulues. Par exemple ils peuvent être positionnés à une même distance donnée « h₁,h₂,h₃ » (qui peut être de 700 mm par exemple) les uns des autres et à une distance donnée « h₀ » (par exemple 500 mm) de l'extrémité supérieure 8 du piquet 1: suivant ainsi l'enfoncement (tel que par exemple de 1 m) de son autre extrémité inférieure 10 dans le sol 17 (facilité par la forme creuse 7 et octogonale du piquet) et la hauteur/longueur totale du piquet 1 (qui peut être de grande dimension, tel que de plus de 3 ou même 4 mètres, du fait de sa grande résistance à la flexion multidirectionnelle : les exemples de hauteurs « h » données ici totalisent du reste une longueur/hauteur de 4,5m), on positionne le fil de soutien 11₄ le plus bas à une hauteur « h₄ » voulue (tel que par exemple 900mm).

La forme octogonale du piquet 1 est refermée 5 par agrafage qui est une technique, connue par ailleurs dans d'autres applications, consistant à :
- former, sur les extrémités 4₁,4₂ des bords longitudinaux de la bande de tôle disposée à plat (et devant constituée la totalité de la paroi du piquet 1 après formage et profilage) deux arrondis inversés (l'un vers le haut et l'autre vers le bas avec une ouverture supérieure à l'épaisseur « e » de la tôle de la paroi),
- rapprocher et emboiter les boucles ainsi réalisées l'une dans l'autre, pendant le procédé de profilage,
- écrouir la superposition ainsi obtenue des quatre épaisseurs de tôle en faisant passer le produit formé entre une matrice intérieure et un galet supérieur fermant ainsi le profil comme un tube,
- former la tôle de paroi pour assurer la continuité de la forme octogonale au niveau de cette fermeture 5 telle que représentée sur la figure 3.

Une telle fermeture 5 par agrafage, avec une épaisseur « e » de tôle de paroi par exemple de 2mm (d'autres épaisseurs sont en effet possibles), ne représente alors en final que 6 mm au plus de surépaisseur « d » par rapport au diamètre nominal « L » du piquet.

Le principe de cette fermeture 5 par agrafage du piquet 1, avec superposition de quatre épaisseurs d'acier replié et écroui, apporte d'une part une résistance de fixation supérieure à la soudure et d' autre part une meilleure résistance à la flexion grâce au raidisseur 5 ainsi créé, soit de 6mm d'épaisseur comme dans le présent exemple décrit précédemment, sur toute la longueur/hauteur du poteau 1.

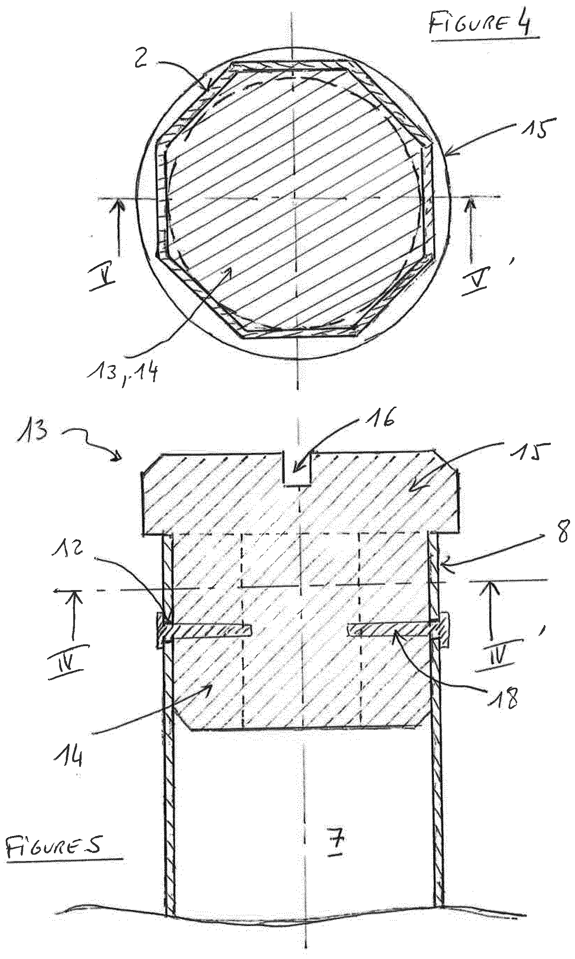

Comme représenté sur les figures 4 et 5, le piquet métallique profilé 1 suivant l'invention peut comporter un bouchon-chapeau 13 à son extrémité supérieure 8 destinée à ne pas être fichée dans le sol : ce bouchon-chapeau 13, qui peut être fabriqué à partir de matériaux 100% recyclables (plastique, cellulose, acier...), vient refermer l'ouverture creuse octogonale 7 sur la partie haute 8 du piquet 1 ; pour cela ce bouchon-chapeau 13 comporte un pied 14 de forme octogonale apte à s'emboiter à l'intérieur de l'ouverture creuse 7 de l'extrémité supérieure 8 du piquet 1.

Ce bouchon-chapeau 13 peut comporter une rainure 16 sur sa face supérieure ou son sommet (quand le piquet est fiché dans le sol 17) de sa tête 15 : cette rainure 16 est apte à permettre, à guider et à supporter le passage d'un câble de faitage, lequel permet lui-même, en combinaison avec les autres câbles de faitage des rangées de palissage adjacentes, de maintenir des filets paragrêles.

Le piquet métallique profilé 1 comporte également au moins deux trous 12, tels que de diamètre 10mm par exemple, situés vers son extrémité supérieure 8 destinée à ne pas être fichée dans le sol 17, lesquels trous sont aptes à recevoir chacun une vis de blocage 18 du bouchon-chapeau 13.

Le chapeau est équipé sur son sommet d'une rainure permettant le passage des câbles de faitage qui permettront eux-mêmes de maintenir les filets paragrêles.

Le poteau 1, en option, peut être recouvert d'un revêtement organique coloré, par exemple de couleur marron, pour permettre une meilleure intégration dans le paysage et augmenter sa durée d'utilisation.

## Revendications

1. Piquet métallique profilé (1) réalisé à partir d'une tôle métallique pliée et apte à supporter au moins un fil de soutien (11) de branches d'arbres exploités en culture d'arbres fruitiers ou similaires, et dont la section (2) est une courbe fermée par agrafage (5) de deux bords longitudinaux de la paroi métallique formant le piquet (1) et comportant au moins un trou apte à permettre le guidage et le support dudit fil de soutien (11), **caractérisé en ce que** la dite courbe est un octogone à huit côtés plans, dont l'agrafage des bords de la paroi métallique est réalisé dans une partie plane d'une des faces du cylindre octogonal de la paroi du piquet et le au moins trou est réalisé par poinçonnage d'une petite partie d'un des huit plans du cylindre octogonal de la paroi du piquet, laquelle petite partie est déformée pour former un linguet (9).

2. Piquet métallique profilé (1) suivant la revendication 1, **caractérisé en ce qu'**il comporte des linguets (9) sur au moins deux côtés opposés de sa forme octogonale (2).

3. Piquet métallique profilé (1) suivant l'une quelconque des revendications 1 à 2, **caractérisé en ce qu'**il comporte un bouchon-chapeau (13) à son extrémité supérieure (8) destinée à ne pas être fichée dans le sol (17).

4. Piquet métallique profilé (1) suivant la revendication 3 **caractérisé en ce que** le bouchon-chapeau (13) comporte une rainure (16) sur son sommet (15) apte à permettre, à guider et à supporter le passage d'un câble de faitage.

5. Piquet métallique profilé (1) suivant l'une quelconque des revendications 3 et 4, **caractérisé en ce que** le bouchon-chapeau (13) comporte un pied (14) de forme octogonale apte à s'emboiter à l'intérieur de l'extrémité supérieure (8) du piquet.

6. Piquet métallique profilé (1) l'une quelconque des revendications 3 à 5 **caractérisé en ce qu'**il comporte au moins deux trous (12) vers son extrémité (8) destinée à ne pas être fichée dans le sol, lesquels trous (12) sont aptes à recevoir chacun une vis (18) de blocage du bouchon-chapeau (13).

7. Piquet métallique profilé (1) suivant l'une quelconque des revendications 1 à 6, **caractérisé en ce qu'**il est recouvert d'un revêtement organique coloré.

## Patentansprüche

1. Metallprofilpfosten (1), hergestellt aus einem gefalteten Metallblech und imstande, mindestens einen Stützdraht (11) von Zweigen von Bäumen zu stützen, die in Obstbaumplantagen oder ähnlichem genutzt werden, und dessen Querschnitt (2) eine durch Verklammerung (5) von zwei Längsrändern der den Pfosten (1) bildenden Metallwand geschlossene Krümmung ist und mindestens ein Loch aufweist, das imstande ist, das Führen und das Stützen des Stützdrahts (11) zu erlauben, **dadurch gekennzeichnet, dass** die Krümmung ein Achteck mit acht ebenen Seiten ist, deren Verklammerung der Ränder der Metallwand in einem ebenen Teil einer der Flächen des achteckigen Zylinders der Wand des Pfostens durchgeführt ist und das mindestens eine Loch durch Stanzen eines kleinen Teils einer der acht Ebenen des achteckigen Zylinders der Wand des Pfostens hergestellt ist, wobei der kleine Teil verformt ist, um einen Haken (9) zu bilden.

2. Metallprofilpfosten (1) nach Anspruch 1, **dadurch gekennzeichnet, dass** er Haken (9) auf mindestens zwei gegenüberliegenden Seiten seiner achteckigen Form (2) aufweist.

3. Metallprofilpfosten (1) nach einem der Ansprüche 1 bis 2, **dadurch gekennzeichnet, dass** er einen Abdeckstopfen (13) an seinem oberen Ende (8) aufweist, das bestimmt ist, nicht in den Boden (17) gesteckt zu sein.

4. Metallprofilpfosten (1) nach Anspruch 3, **dadurch gekennzeichnet, dass** der Abdeckstopfen (13) eine Rille (16) auf seiner Spitze (15) aufweist, die imstande ist, den Durchgang eines Firstkabels zu erlauben, zu führen und zu stützen.

5. Metallprofilpfosten (1) nach einem der Ansprüche 3 und 4, **dadurch gekennzeichnet, dass** der Abdeckstopfen (13) einen achteckigen Fuß (14) aufweist, der imstande ist, in das Innere des oberen Endes (8) des Pfostens einzurasten.

6. Metallprofilpfosten (1) nach einem der Ansprüche 3 bis 5, **dadurch gekennzeichnet, dass** er mindestens zwei Löcher (12) zu seinem Ende (8) aufweist, das bestimmt ist, nicht in den Boden gesteckt zu sein, wobei die Löcher (12) imstande sind, jeweils eine Blockierschraube (18) des Abdeckstopfens (13) zu empfangen.

7. Metallprofilpfosten (1) nach einem der Ansprüche 1 bis 6, **dadurch gekennzeichnet, dass** er mit einer farbigen organischen Beschichtung bedeckt ist.

## Claims

1. Profiled metal stake (1) made of folded metal sheeting and capable of supporting at least one support wire (11) for supporting the branches of trees grown for fruit tree or similar farming, the section (2) of which is a curve closed by fastening (5) two longitudinal edges of the metal wall forming the stake (1) and comprising at least one hole capable of allowing for the guiding and support of said support wire (11), **characterised in that** said curve is an octagon with eight planar sides, for which the fastening of the edges of the metal wall takes place in a planar portion of one of the faces of the octagonal cylinder of the wall of the stake and the at least one hole is produced by punching a small portion of one of the eight planes of the octagonal cylinder of the wall of the stake, which small portion is deformed to form a pawl (9).

2. Profiled metal stake (1) according to claim 1, **characterised in that** it comprises pawls (9) on at least two opposite sides of the octagonal shape (2) thereof.

3. Profiled metal stake (1) according to any of claims 1 to 2, **characterised in that** it comprises a plug cap (13) at the upper end (8) thereof, intended to not be driven into the ground (17).

4. Profiled metal stake (1) according to claim 3, **characterised in that** the plug cap (13) comprises a groove (16) on its top (15) thereof capable of allowing, guiding and supporting the passage of a ridge cable.

5. Profiled metal stake (1) according to any of claims 3 and 4, **characterised in that** the plug cap (13) comprises an octagonal leg (14) capable of fitting inside the upper end (8) of the stake.

6. Profiled metal stake (1) according to any of claims 3 to 5, **characterised in that** it comprises at least two holes (12) towards the end (8) thereof, intended to not be driven into the ground, each of which holes (12) being capable of receiving a screw (18) for locking the plug cap (13).

7. Profiled metal stake (1) according to any of claims 1 to 6, **characterised in that** it is coated in a coloured organic coating.
